# EUROPEAN PATENT SPECIFICATION

(11) **EP 3 456 103 B1**
(45) Date of publication and mention of the grant of the patent: **23.02.2022**
(21) Application number: 16723086.1
(22) Date of filing: 12.05.2016
(51) Int. Cl.: H04W 52/02, H04W 88/06, H04W 8/18

(54) **COMMUNICATION DEVICE AND METHOD THEREIN FOR HANDLING CONNECTION STATE CHANGES IN WIRELESS COMMUNICATION NETWORK**
KOMMUNIKATIONSVORRICHTUNG UND VERFAHREN DARIN ZUR HANDHABUNG VON VERBINDUNGSSTATUSÄNDERUNGEN IN EINEM DRAHTLOSKOMMUNIKATIONSNETZ
DISPOSITIF DE COMMUNICATION ET PROCÉDÉ ASSOCIÉ DESTINÉS À GÉRER DES CHANGEMENTS D'ÉTAT DE CONNEXION DANS UN RÉSEAU DE COMMUNICATION SANS FIL

(43) Date of publication of application: 20.03.2019
(73) Proprietor: Telefonaktiebolaget LM Ericsson (publ), 164 83 Stockholm (SE)
(72) Inventor: LINDOFF, Bengt, 237 35 Bjärred (SE); ÅSTRÖM, Magnus, 222 28 Lund (SE); AXMON, Joakim, 244 41 Kävlinge (SE); NILSSON, Johan, 236 38 Höllviken (SE)
(74) Representative: Ericsson
(86) International application number: PCT/EP2016/060718
(87) International publication number: WO 2017/194131

(56) References cited:
- CN-A- 103 716 871
- US-A1- 2012 191 994
- US-A1- 2015 282 057

## Description

### TECHNICAL FIELD

Embodiments herein relate to a wireless communication device and a method therein. In particular, they relate to handling connection state changes in the wireless communication device which comprises multiple receiving paths and at least two Subscriber Identity Modules (SIMs) for power consumption management.

### BACKGROUND

Wireless communication devices may be referred to as mobile telephones, user equipments (UE), wireless terminals, mobile terminals, mobile stations, cellular telephones, smart phones, laptops, tablets and phablets, i.e. a combination of a smartphone and a tablet with wireless capability. Wireless communication devices are enabled to communicate or operate wirelessly in a wireless communication system comprising multiple networks or Heterogeneous Networks (HetNet) with access nodes or access points. The heterogeneous networks may comprise, e.g. a cellular communications network comprising Second /Third Generation (2G/3G) network, such as Global System for Mobile Communications (GSM), Wideband Code Division Multiple Access (WCDMA) or High Speed Packet Access (HSPA) etc., 3G Long Term Evolution (LTE) network, Worldwide interoperability for Microwave Access (WiMAX) network, Wireless Local Area Network (WLAN) or WiFi etc. for proving different type of radio access technologies (RATs). A wireless communications network may cover a geographical area which is divided into cells or cover areas, wherein each cell is served by a network node, which may also be referred to as a serving network node, an access node, an access point or a base station, e.g. eNodeB or NodeB.

The development of new generations of cellular systems simultaneously with upgrading existing generations allows for a wider range of accessible networks and RATs. In an environment where e.g., both LTE and HSPA co-exist, data rates for the two RATs are comparable. Furthermore, both LTE and HSPA allow for multi carrier signalling. In LTE this capability is denoted as Carrier Aggregation (CA), allowing for up to five LTE carriers to be aggregated, whereas in HSPA it is denoted as Multi Carrier (MC), allowing for up to eight HSPA carriers to be aggregated.

Further, specifications for the Evolved Packet System (EPS), also called a Fourth Generation (4G) network, have been completed within the 3^{rd} Generation Partnership Project (3GPP) and this work continues in the coming 3GPP releases, for example to specify a Fifth Generation (5G) network. This will provide more accessible networks and RATs.

An arising scenario today is multiple Subscriber Identity Modules (SIMs) devices which may carry two or more SIMs from a single or multiple operators in the same device. Particularly in Asia this has become de facto standard, although it has not been standardized by the 3rd Generation Partnership Project (3GPP). On many markets it is hard to get operator approval and volumes for a mid-end device without the capability of supporting at minimum Dual SIM Dual Standby (DSDS). The capability of supporting DSDS allows a UE to be camping on two cells simultaneously, or being connected to one cell and camping on the other. In case both SIMs are from the same operator, the UE may occasionally camp on the same cell but with two different identities and associated paging occasions. In order to qualify for high-end device approval, it is generally required to support Dual SIM Dual Activity (DSDA), whereby the UE can be independently connected towards two cells simultaneously.

The popularity of DSDS/DSDA devices on Asian markets depends on several factors. One factor may be that operators have different price plans e.g. for data and voice, or may have different price plans depending on calling subscribers in same or other network. Other factors may be, e.g. different coverage by different operators, i.e. spotty coverage, or that one cannot move a mobile phone number between operators. The trend is towards to support even more than two SIMs simultaneously, and devices with support for three and four SIMs, Triple SIM, Triple Standby (TSTS) and Quad SIM Quad Standby (QSQS) have been announced by some UE vendors.

For DSDA devices in active mode, it is required for the UE to use separate receivers for each connection, since it e.g. may use a Packet Switched (PS) service simultaneously for both SIMs, or may use PS service for one and a Circuit Switched (CS) service for the other. Therefore to support DSDS/DSDA, TSTS/QSQS and different RATs, the wireless communication devices usually comprise multiple receiving modules or paths.

The wireless communication devices with dual-SIM or multiple SIMs typically have higher power consumption compared to the wireless communication devices with single SIM, since the devices need to have connection to two different network nodes at the same time. This is especially true for DSDA capable devices needing to be in active mode with respect to the first and second SIM at the same time via two different receiving modules. However, this is also true for DSDS devices since the devices need to perform idle mode tasks, e.g. paging reception, Radio Resource Management (RRM) measurements, system Information acquisition, cell reselection, etc. for both SIMs.

US20151191 discloses prioritizing between communication technologies and concurrent active communications in a DSDA mobile device. Based on determined priorities, the mobile device may allocate resources to favor the SIM with the higher priority. When multiple SIMs are active concurrently, i.e. in active connection states, the mobile device may determine when radio resources need to be allocated in favor of a single SIM based on the type of information transmitted on that SIM connection. In this way, the other SIM may have to stop its active communications and thus it is not an optimum solution.

US2012191994A1 discloses a method for saving power of an electronic device, in which a power saving mode is defined for saving power of the electronic device, and a plurality of power configurations for the power saving mode are set. The method invokes the power saving mode of the electronic device, and determines whether the electronic device is in the power saving mode when the electronic device executes functions or applications of the electronic device. If the electronic device is in the power saving mode, the power configurations of the power saving mode are executed. If the electronic device is in a normal mode saving mode, normal configurations of the normal mode of the electronic device are executed.

CN103716871A discloses a portable device comprising a first wireless module, a second wireless module, a first subscriber identity card coupled to the first wireless module, a second subscriber identity card coupled to the second wireless module and a battery. The first subscriber identity card camps on a cell via the first wireless module. The second subscriber identity card camps on the same cell or a different cell via the second wireless module. A first transmission power of one of the first and second wireless modules is maintained, and a second transmission power of another one of the first and second wireless modules is dynamically adjusted according to a variation in a voltage of the battery.

US2015282057A1 discloses methods and devices for implementing opportunistic mobile receive diversity ("OMRD") on a multi-SIM wireless device. The wireless device may receive a request from a protocol stack associated with the first SIM to utilize the second RF resource for receive diversity, and determine whether a protocol stack associated with the second SIM currently has a lower priority than the protocol stack
associated with the first SIM. Upon determining that the protocol stack associated with the second SIM currently has a lower priority than the protocol stack associated with the first SIM, the wireless device may grant control of the second RF resource to the protocol stack associated with the first SIM. Granting control may provide, to the protocol stack associated with the first SIM, a capability to enable and disable receive diversity using the first and second RF resources.

To save power and improving the performance of wireless communication devices for respective SIMs, it is desirable to manage connection states of the multiple SIMs.

### SUMMARY

It is therefore an object of embodiments herein to provide an improved connection states management for respective SIMs for a wireless communication device with multiple SIMs in a wireless communication system.

The present invention is defined by the appended independent claims, to which reference should now be made. Specific embodiments are defined in the dependent claims. According to a first aspect of embodiments herein, the object is achieved by a method performed in a wireless communication device for handling connection state changes in a wireless communication system. The wireless communication device comprises at least two Subscriber Identity Modules (SIMs). A first SIM is in a first original connection state towards a first network node, a second SIM is in a second original connection state towards a second network node. The wireless communication device first determines whether a battery power in the wireless communication device is below a first threshold. When the battery power is below the first threshold, the wireless communication device selects a SIM out of the at least two SIMs for which to change its original connection state to a third connection state based on a parameter. The third connection state is a connection state implying lower power consumption for the wireless communication device compared to its original connection state. Then the wireless communication device performs a connection state change for the selected SIM from its original connection state to the third connection state.

According to a second aspect of embodiments herein, the object is achieved by a wireless communication device for handling connection state changes in a wireless communication system. The wireless communication device comprises at least two Subscriber Identity Modules (SIMs). A first SIM is in a first original connection state towards a first network node, a second SIM is in a second original connection state towards a second network node. The wireless communication device is configured to determine whether a battery power in the wireless communication device is below a first threshold. When the battery power is below the first threshold, the wireless communication device is configured to select a SIM out of the at least two SIMs for which to change its original connection state to a third connection state based on a parameter. The third connection state is a connection state implying lower power consumption for the wireless communication device compared to its original connection state. Then the wireless communication device is configured to perform a connection state change for the selected SIM from its original connection state to the third connection state.

According to the embodiments herein, a connection state management is provided for the wireless communication device with multiple SIM in case the battery level goes below a critical level. In case the wireless communication device, e.g. DSDA/DSDS device, reaches a critical low battery level, it might not be preferable to have both connections in high active state. Therefore, once the battery level goes below a first threshold, based on a connection properties parameter, e.g. radio channel characteristics, radio network capabilities or services provided by the connection for respective SIMs, one of the SIMs is selected and ordered to go to a connection state with lower power consumption. This improved connection states management for respective SIMs allows for a proper connection state change for most suitable SIM if some of the SIMs need to go to a less active state due to low battery power. As a result, a better user experience is achieved.

### BRIEF DESCRIPTION OF THE DRAWINGS

Examples of embodiments herein are described in more detail with reference to attached drawings in which:
- Figure 1: is a schematic block diagram illustrating embodiments of a wireless communication system.
- Figure 2: is a flowchart illustrating embodiments of a method in a wireless communication device.
- Figure 3: is a schematic block diagram illustrating embodiments of a wireless communication device.

### DETAILED DESCRIPTION

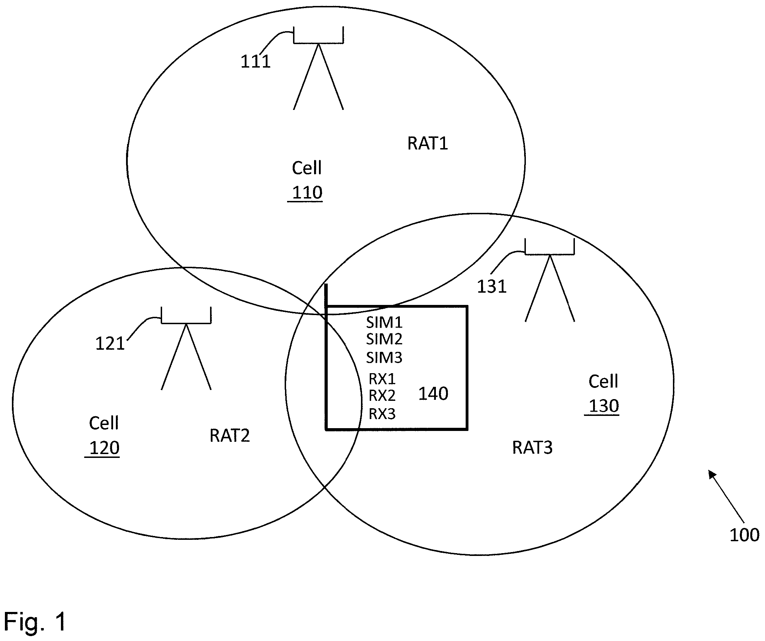

**Figure 1** depicts an example of a **wireless communication system 100** in which embodiments herein may be implemented. The wireless communication system 100 may comprise one or more wireless communication networks such as e.g. any 2G, 3G, 4G or LTE, 5G networks, Wimax, WLAN or WiFi , Bluetooth etc. for providing different RATs.

Each wireless communication network may cover a geographical area which is divided into cells or cover areas. Each cell area is served by a network node operating in the respective wireless communication network. In figure 1, three network nodes are shown, **network node 111, network node 121,** and **network node 131.** The term network node as used herein may also referred to as a serving network node, an access node, an access point or a base station. Therefore the wireless communication system 100 may comprise a number of network nodes serving cells with RATs which may be different, and support communications for a number of wireless communication devices located therein. The network node 111 serves a **cell 110** and provides a first RAT, **RAT1,** the network node 121 serves a **cell 120** and provides a second RAT, **RAT2,** and the network node 131 serves a cell **130** and provides a third RAT, **RAT3.** The RATs, RAT1, RAT2 and RAT3 may be same or different RATs, e.g. LTE, WCDMA, HSPA, GSM or Enhanced Data GSM Evolution (EDGE), or some future 5G cellular system etc.

A number of wireless communication devices operate in the wireless communication system 100, whereof one, a **wireless communication device 140,** is shown in Figure 1.

The wireless communication device 140 may be, e.g. a mobile terminal or station, a wireless terminal, a user equipment, a mobile phone, a computer such as e.g. a laptop, a Personal Digital Assistants (PDAs) or a tablet computer etc. The wireless communication device 140 comprises at least two SIMs, whereof the wireless communication device 140 shown in Figure 1 comprises SIM1, SIM2, SIM3. The at least two SIMs may belong to different operators, e.g. which may provide different subscriptions, or provide different RATs or use different spectrum in different cover areas or cells, e.g. in cities or countryside. Further, the service subscriptions of the two or more SIMs may differ, such as one SIM may provide an all-exclusive service whereas the other may provide only fundamental past generation service.

The wireless communication device 140 comprises multiple radio receiving paths, whereof the wireless communication device 140 shown in Figure 1 comprises three radio receiving paths RX1, RX2, RX3.

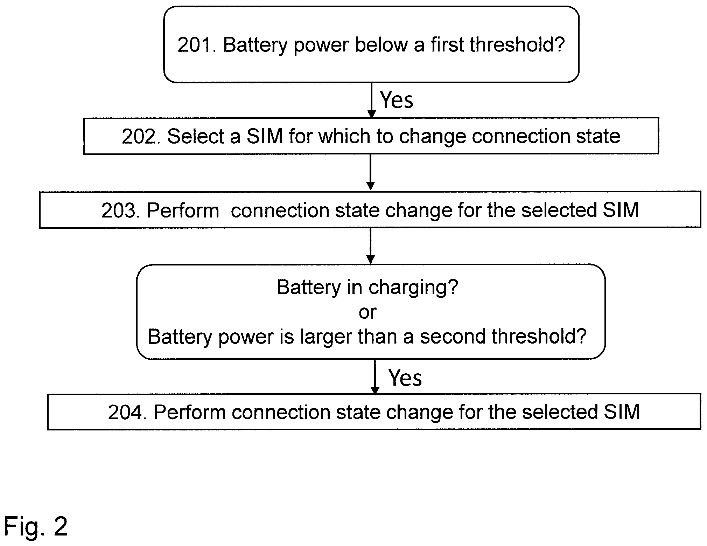

Example of embodiments of a method performed in the wireless communication device 140 for handling connection state changes in the wireless communication system 100 will now be described with reference to **Figure 2****.** The wireless communication device 140 comprises at least two Subscriber Identity Modules (SIMs). A first SIM is in a first original connection state towards a first network node 111, a second SIM is in a second original connection state towards a second network node 121. The first and second connection states may be the same or not, depending on the wireless communication device 140 capability (DSDA/DSDS). Both SIMs may be connected to the same RAT while in other embodiments, they may be connected to different RATs. Moreover in some embodiments the SIMs are connected to the same operator, while in other embodiments they are connected to different operators.

The method comprises the following actions, which actions may be taken in any suitable order.

### Action 201

In order to manage connection states of the multiple SIMs and improve the performance of the wireless communication device 40 for the respective SIMs with respect to its battery power, the wireless communication device 140 determines whether a battery power in the wireless communication device 140 is below a first threshold.

### Action 202

When the battery power is below the first threshold, the wireless communication device 140 selects a SIM out of the at least two SIMs for which to change its original connection state to a third connection state based on a connection characteristic parameter. The third connection state is a connection state implying lower power consumption for the wireless communication device 140 compared to its original connection state.

Examples of lower power consumption connection states, compared to active mode e.g., RRC _connected (Radio Resource Control) in LTE, Cell_DCH (Dedicated Channel), Cell_FACH (Forward access channel) in HSPA etc., may be idle mode, e.g. monitor paging and carry out mobility management; or less active states, for instance Cell_FACH instead of Cell_DCH in WCDMA/HSPA. In some embodiment it may also be a detached state, i.e. not connected or registered to the network node. In yet other embodiments it may be a detached state with occasional attaches or connections to the network node to poll received text, date and/or multimedia messages and the alike. For example, the detached SIM may attach and register to the network periodically, e.g. every 10 minutes or sparser to poll for text and multimedia messages e.g. carrying information on missed calls and/or voice messages etc.

Therefore, according to some embodiments herein, the first and second connection states may be active mode and the third connection state may be idle mode with occasional network attachments to poll received messages.

According to some embodiments herein, the first and second connection states may be active mode and the third connection state may be idle mode.

According to some embodiments herein, the first and second connection states may be idle mode and the third connection state may be a detached state.

According to some embodiments herein, when the wireless communication device 140 has multiple or more than 2 SIMs, more than one SIMs may be selected to change their respective original connection states to other connection states which have lower power consumption than their respective original connection states.

According to some embodiments herein, the connection characteristic parameter may be associated to one or a combination of the following different parameters:
**Radio channel characteristics:** the radio channel characteristics for the connection state associated to the respective SIMs, such as throughput, latency, Signal Interference Noise Ratio (SINR), Channel State Information (CSI), channel bandwidth, carrier frequency etc. may be monitored or evaluated. The connection state of a SIM will have higher power consumption if SINR requirement is high, or the distance between the wireless communication device 140 and the respective network node is large. This is because down link and up link processing, low noise amplifiers and power amplifiers in the radio paths etc. need more power to operate. One approach may be to disable the worst link or connection. Hence the SIM with lower system bandwidth or lower CSI may be selected to change to a third state, e.g. the connection associated with the selected SIM may be disabled. However, it may also be, in case only sufficient service needed e.g. voice, SMS, that the SIM with highest power consumption is selected to change to a third state or disabled. This may be a connection associated with the selected SIM using a RAT with wide bandwidth, or high carrier frequency.
**Radio network capabilities:** the radio network capabilities for the connection state associated to the respective SIMs may be monitored or evaluated. For example, maximum transmission rank, modulation order, carrier aggregation capabilities, beamforming capabilities, transmission mode etc. may be based on when selecting the SIM to change its connection state. In most cases, the best connection stays alive, i.e. the connection with the best throughput, highest RANK etc..
**User behavior or Quality of Service** (QoS): the user behavior, data rate, throughput, latency, targeted Block Error Rate (BLER) for the connection state associated to the respective SIMs may be monitored or evaluated. For example, current services provided by the respective network and requested by the user for respective connections. The SIM with the lowest QoS may be selected to change to a third connection state.
**Cost:** cost for the connection state associated to the respective SIMs may be evaluated, for example the SIM associated to the highest cost may be selected to change to a third connection state.
**Services:** services provided by the connection state associated to the respective SIMs may be evaluated, the SIM providing a lower priority services than data or voice services may be selected to change to a third connection state. For instance the connection state of the SIM with data only may be forced to be idle, if the original connection state is active mode, and the connection state of the SIM with voice and data may continue to stay in its original connection.
**Random sequence:** a random sequence associated to the respective SIMs may be used to select the SIM to change its connection state. There are different ways to generate the randomness. For example, N:th digit of respective SIM number may be used, next time (N+1):th digit of respective SIM number etc.
**Priority of each SIM:** a priority list between the connections or SIMs may be set by user or operator. The connection(s) with lowest priority is changed to a less power consuming state. The priority of each SIM may also be set by a random number, once the battery level goes below a threshold, a SIM may be selected randomly to change its connection state to a third state.

After the wireless communication device 140 have selected the SIM to change its connection state, the following action is performed:

### Action 203

The wireless communication device 140 performs a connection state change for the selected SIM from its original connection state to the third connection state.

According to some embodiments, performing a connection state change may comprise a Radio Resource Control (RRC) signaling to the network node associated to the selected SIM. This is in order for the connection state change to be performed in a secure manner.

According to some embodiments, the connection state change may be triggered by transmitting a request to the serving node of the selected SIM or triggered by the wireless communication device 140. In the case where the connection state of the selected SIM is changed from idle mode to a detached state, the wireless communication device 140 informs the corresponding network node that it is going to turn off the connection.

According to some embodiments herein, the connection states of all SIMs may be changed but to varying degrees, such that the prioritized SIM may optimize cell or RAT selection based on power consumption instead of e.g., throughput.

According to some embodiments herein, the connection state change may comprise a change of radio access technology. In case the the wireless communication device 140 has detected other RATs on other carrier frequencies, e.g. detected via well-known Inter RAT (IRAT) measurements or by autonomous search. The selected SIM may choose one of the detected RATs which have less power consumption, and the connection for the selected SIM may be changed to use this RAT.

When the the wireless communication device 140 is connected to a charger and the battery is charging, or the battery level is above a second threshold, power consumption is not critical anymore, then the following action may be performed:

### Action 204

The wireless communication device 140 may perform a connection state change for the selected SIM from the third connection state to a fourth connection state when it is determined that a battery of the wireless communication device 140 is in charging or the battery power is larger than a second threshold. The fourth connection state may have higher power consumption for the wireless communication device 140 compared to the third connection state, and therefore may have higher performance.

According to some embodiments herein, the fourth connection state may be the original connection state of the selected SIM.

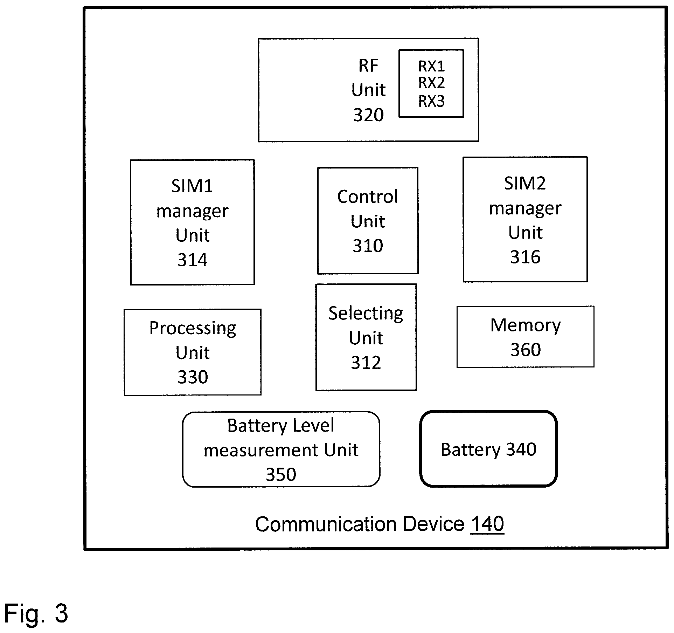

To perform the method actions in the wireless communication device 140 for handling connection state changes in the wireless communication system 100 described above in relation to Figure 2, the wireless communication device 140 comprises the following circuits, units or modules depicted in **Figure 3****.** As mentioned above, the wireless communication system 100 comprises any one or more 2G, 3G, 4G or LTE , 5G networks, Wimax, WLAN or WiFi etc. The wireless communication device 140 comprises at least two Subscriber Identity Modules (SIMs). A first SIM is in a first original connection state towards a first network node 111, a second SIM is in a second original connection state towards a second network node 121. The first and second connection states may be the same or not, depending on the wireless communication device 140 capability (DSDA/DSDS). Both SIMs may be connected to the same RAT while in other embodiments, they may be connected to different RATs. Moreover in some embodiments the SIMs are connected to the same operator, while in other embodiments they are connected to different operators.

The wireless communication device 140 may comprise, e.g. **a control unit 310, a selecting unit 312, a SIM1 manager unit 314, a SIM2 manager unit 316, a determining unit 318, an RF unit 320, a baseband processing unit 330, a battery 340, a battery level measurement unit 350** etc. The control unit 310 controls respective SIM manager units 314, 316. The SIM manager units 314, 316 keeps track of the connection states for respective SIM:s towards the associated network nodes. The RF unit 320 may represent any radio resources or radio interfaces, e.g. radio receivers or transmitters etc. for receiving and transmitting radio signals from/to network nodes. The RF unit 320 may comprise multiple receiving paths RX1, RX2, RX3 as shown in Figure 3, to convert received RF signals to baseband signals. The baseband processing unit 330 processes baseband signals received from the RF unit 320. The battery level measurement unit 350 may measure and monitor the battery power level and informs the control unit 310 about the battery status or if the device is connected to a charger and hence battery is charging.

According to the embodiments herein, the communication device 140 is configured to, e.g. by means of the control unit 310 being configured to, determine whether a battery power in the wireless communication device 140 is below a first threshold.

When the battery power is below the first threshold, the communication device 140 is configured to, e.g. by means of the selecting unit 312 being configured to, select a SIM out of the at least two SIMs for which to change its original connection state to a third connection state based on a parameter. The third connection state is a connection state implying lower power consumption for the wireless communication device 140 compared to its original connection state.

The communication device 140 is further configured to, e.g. by means of the control unit 310 being configured to, perform a connection state change for the selected SIM from its original connection state to the third connection state.

According to some embodiments herein, more than one SIMs may be selected to change their respective original connection states to other connection states which have lower power consumption than their respective original connection states.

According to some embodiments herein, the parameter may be associated to at least one of: radio channel characteristics for the connection state associated to the respective SIMs; radio network capabilities for the connection state associated to the respective SIMs; a user behavior or QoS for the connection state associated to the respective SIMs; a cost for the connection state associated to the respective SIMs; services provided by the connection state associated to the respective SIMs; a random sequence associated to the respective SIMs and a priority of each SIM set by user, operator or a random number.

According to some embodiments herein, the first and second connection states may be active mode and the third connection state may be idle mode.

According to some embodiments herein, the first and second connection states may be idle mode and the third connection state may be a detached state.

According to some embodiments herein, the first and second connection states may be active mode and the third connection state may be idle mode with occasional network attachments to poll received messages.

According to some embodiments herein, the wireless communication device 140 may be configured to select the SIM with the lowest QoS, or select the SIM associated to the highest cost, or select the SIM providing a lower priority services than data or voice services, to change to a third connection state.

According to some embodiments herein, the wireless communication device 140 may be configured to perform a connection state change by being configured to perform a Radio Resource Control, RRC, signaling to the network node associated to the selected SIM.

According to some embodiments herein, the connection state change may comprise a change of radio access technology.

According to some embodiments herein, the wireless communication device may be configured to perform a connection state change for the selected SIM from the third connection state to a fourth connection state when it is determined that a battery of the wireless communication device 140 is in charging or the battery power is larger than a second threshold, wherein the fourth connection state may have higher power consumption for the wireless communication device 140 compared to the third connection state. The fourth connection state may be its original connection state for the selected SIM.

Those skilled in the art will appreciate that the control unit 310, the selecting unit 312, the SIM1 manager unit 314 and SIM2 manager unit 316, the determining unit 318 described above may be referred to one unit, a combination of analog and digital circuits, one or more processors, such as the processing unit 330, depicted in Figure 3, configured with software and/or firmware and/or any other digital hardware performing the function of each unit. One or more of these processors, the combination of analog and digital circuits as well as the other digital hardware, may be included in a single application-specific integrated circuitry (ASIC), or several processors and various analog/digital hardware may be distributed among several separate components, whether individually packaged or assembled into a system-on-a-chip (SoC).

The wireless communication device 140 may further comprise a **memory 360** comprising one or more memory units. The memory 360 is arranged to be used to store information, e.g. lists of cells, throughput and latency measurements, connection characteristic parameters and data, as well as configurations to perform the methods herein when being executed in the communication device 140.

The embodiments herein in the wireless communication device 140 for handling connection state changes in the wireless communication system 100, may be implemented through one or more processors, such as the processing unit 330 in the wireless communication device 140 together with computer program code for performing the functions and actions of the embodiments herein. The program code mentioned above may also be provided as a computer program product, for instance in the form of a data carrier carrying computer program code for performing the embodiments herein when being loaded into the wireless communication device 140. One such carrier may be in the form of a CD ROM disc. It is however feasible with other data carriers such as a memory stick. The computer program code may furthermore be provided as pure program code on a server and downloaded to the wireless communication device 140.

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

## Claims

1. A method performed in a wireless communication device (140) for handling connection state changes in a wireless communication system (100), wherein the wireless communication device (140) comprises at least two Subscriber Identity Modules, SIMs, in which a first SIM is in a first original connection state towards a first network node, a second SIM is in a second original connection state towards a second network node, the method comprising:
*determining* (201) whether a battery power in the wireless communication device (140) is below a first threshold;
when the battery power is below the first threshold,
*selecting* (202) a SIM out of the at least two SIMs for which to change its original connection state to a third connection state based on a connection characteristic parameter, wherein:
the connection characteristic parameter is associated to at least one of:
a) radio channel characteristics for the connection state associated to the respective SIMs,
b) radio network capabilities for the connection state associated to the respective SIMs,
c) Quality of Service, QoS, for the connection state associated to the respective SIMs,
d) a cost for the connection state associated to the respective SIMs, and
e) services provided by the connection state associated to the respective SIMs,
the first and second original connection states are active mode, and
the third connection state is a connection state implying lower power consumption for the wireless communication device (140) compared to its original connection state, and is any one of an active mode with a different
radio access technology, RAT, than the connection RAT of the selected SIM, an idle mode, or a detached state with occasional
network attachments to poll received messages; and
*performing* (203) a connection state change for the selected SIM from its original connection state to the third connection state.

2. The method according to claim 1, wherein more than one SIMs are selected to change their respective original connection states to other connection states which have lower power consumption than their respective original connection states.

3. The method according to claim 1, wherein the radio channel characteristics comprise one of Signal Interference Noise Ratio, SINR, Channel State Information, CSI, channel bandwidth, carrier frequency.

4. The method according to claim 1, wherein QoS comprises one of throughput, latency, targeted Block Error Rate, BLER.

5. The method according to claim 1, wherein the radio network capabilities comprise one of maximum transmission rank, modulation order, carrier aggregation capabilities, beamforming capabilities, transmission mode.

6. The method according to claim 1, wherein the SIM with the lowest QoS is selected to change to a third connection state.

7. The method according to claim 1, wherein the SIM associated to the highest cost is selected to change to a third connection state.

8. The method according to claim 1, wherein the SIM providing a lower priority services than data or voice services is selected to change to a third connection state.

9. The method according to any one of claims 1-8, wherein performing (203) a connection state change comprises a Radio Resource Control, RRC, signaling to the network node associated to the selected SIM.

10. The method according to any one of claims 1-9, further comprising:
*performing* a connection state change for the selected SIM from the third connection state to a fourth connection state when it is determined that a battery of the wireless communication device (140) is in charging or the battery power is larger than a second threshold, wherein the fourth connection state has higher power consumption for the wireless communication device (140) compared to the third connection state.

11. The method according to 10, wherein the fourth connection state is the original connection state of the selected SIM.

12. A wireless communication device (140) for handling connection state changes in a wireless communication system (100), wherein the wireless communication device (140) comprises at least two Subscriber Identity Modules, SIMs, in which a first SIM is in a first original connection state towards a first network node, a second SIM is in a second original connection state towards a second network node, the wireless communication device (140) is configured to:
determine whether a battery power in the wireless communication device (140) is below a first threshold;
when the battery power is below the first threshold,
select a SIM out of the at least two SIMs for which to change its original connection state to a third connection state based on a connection characteristic parameter, wherein:
the connection characteristic parameter is associated to at least one of:
a) radio channel characteristics for the connection state associated to the respective SIMs,
b) radio network capabilities for the connection state associated to the respective SIMs,
c) Quality of Service, QoS, for the connection state associated to the respective SIMs,
d) a cost for the connection state associated to the respective SIMs, and
e) services provided by the connection state associated to the respective SIMs,
the first and second original connection states are active mode, and
the third connection state is a connection state implying lower power consumption for the wireless communication device (140) compared to its original connection state, and is any one of an active mode with a
different radio access technology, RAT, than the connection RAT of the selected SIM, an idle mode, or a detached state with
occasional network attachments to poll received messages; and
perform a connection state change for the selected SIM from its original connection state to the third connection state.

13. The wireless communication device (140) according to claim 12, wherein more than one SIMs are selected to change their respective original connection states to other connection states which have lower power consumption than their respective original connection states.

14. The wireless communication device (140) according to claim 12, wherein the radio channel characteristics comprise one of Signal Interference Noise Ratio, SINR, Channel State Information, CSI, channel bandwidth, carrier frequency.

15. The wireless communication device (140) according to claim 12, wherein QoS comprises one of throughput, latency, targeted Block Error Rate, BLER.

16. The wireless communication device (140) according to claim 12, wherein the radio network capabilities comprise one of maximum transmission rank, modulation order, carrier aggregation capabilities, beamforming capabilities, transmission mode.

17. The wireless communication device (140) according to claim 12-16, wherein the SIM with the lowest QoS is selected to change to a third connection state.

18. The wireless communication device (140) according to claim 12, wherein the SIM associated to the highest cost is selected to change to a third connection state.

19. The wireless communication device (140) according to claim 12, wherein the SIM providing a lower priority services than data or voice services is selected to change to a third connection state.

20. The wireless communication device (140) according to any one of claims 12-19, wherein the wireless communication device (140) is configured to perform a connection state change by being configured to perform a Radio Resource Control, RRC, signaling to the network node associated to the selected SIM.

21. The wireless communication device (140) according to any one of claims 12-20, further being configured to:
perform a connection state change for the selected SIM from the third connection state to a fourth connection state when it is determined that a battery of the wireless communication device (140) is in charging or the battery power is larger than a second threshold, wherein the fourth connection state has higher power consumption for the wireless communication device (140) compared to the third connection state.

22. The wireless communication device (140) according to 21, wherein the fourth connection state is the original connection state of the selected SIM.

## Patentansprüche

1. Verfahren, das in einer drahtlosen Kommunikationsvorrichtung (140) zur Handhabung von Verbindungszustandsänderungen in einem drahtlosen Kommunikationssystem (100) durchgeführt wird, wobei die drahtlose Kommunikationsvorrichtung (140) mindestens zwei Teilnehmeridentitätsmodule, SIMs, umfasst, wobei ein erstes SIM in einem ersten ursprünglichen Verbindungszustand zu einem ersten Netzwerkknoten ist, ein zweites SIM in einem zweiten ursprünglichen Verbindungszustand zu einem zweiten Netzwerkknoten ist, wobei das Verfahren umfasst:
*Bestimmen* (201), ob ein Batteriestrom in der drahtlosen Kommunikationsvorrichtung (140) unter einem ersten Schwellenwert liegt;
wenn der Batteriestrom unter dem ersten Schwellenwert liegt,
*Auswählen* (202) eines SIMs aus den mindestens zwei SIMs, für das dessen ursprünglicher Verbindungszustand basierend auf einem Verbindungseigenschaft-Parameter in einen dritten Verbindungszustand geändert werden soll, wobei:
der Verbindungseigenschaft-Parameter mindestens einem zugeordnet ist von:
a) Funkkanaleigenschaften für den Verbindungszustand, der den jeweiligen SIMs zugeordnet ist,
b) Funknetzkapazitäten für den Verbindungszustand, der den jeweiligen SIMs zugeordnet ist,
c) der Dienstgüte (QoS) für den Verbindungszustand, der den jeweiligen SIMs zugeordnet ist,
d) Kosten für den Verbindungszustand, der den jeweiligen SIMs zugeordnet ist, und
e) Dienste, die durch den Verbindungszustand, der den jeweiligen SIMs zugeordnet ist, bereitgestellt werden,
wobei der erste und der zweite ursprüngliche Verbindungszustand ein aktiver Modus sind, und der dritte Verbindungszustand ein
Verbindungszustand ist, der einen geringeren Stromverbrauch für die drahtlose Kommunikationsvorrichtung (140) im Vergleich zu ihrem ursprünglichen Verbindungszustand impliziert und einer von einem aktiven Modus mit einer anderen Funkzugangstechnologie, RAT, als der Verbindungs-RAT des ausgewählten SIMs, einem Leerlaufmodus oder einem abgetrennten Zustand mit gelegentlichen Netzanschlüssen zum Abrufen empfangener Nachrichten ist; und
*Durchführen* (203) einer Verbindungszustandsänderung für das ausgewählte SIM von dessen ursprünglichen Verbindungszustand zu dem dritten Verbindungszustand.

2. Verfahren nach Anspruch 1, wobei mehr als ein SIM ausgewählt wird, um deren jeweilige ursprüngliche Verbindungszustände in andere Verbindungszustände zu ändern, die einen geringeren Stromverbrauch aufweisen als deren jeweilige ursprüngliche Verbindungszustände.

3. Verfahren nach Anspruch 1, wobei die Funkkanaleigenschaften eines von Signal Interference Noise Ratio, SINR, Kanalzustandsinformation, CSI, Kanalbandbreite, Trägerfrequenz umfassen.

4. Verfahren nach Anspruch 1, wobei QoS eines von Durchsatz, Latenz, gezielte Blockfehlerrate, BLER, umfasst.

5. Verfahren nach Anspruch 1, wobei die Funknetzfähigkeiten eines von maximalem Übertragungsrang, Modulationsreihenfolge, Trägeraggregationsfähigkeiten, Strahlformungsfähigkeiten, Übertragungsmodus umfassen.

6. Verfahren nach Anspruch 1, wobei das SIM mit der niedrigsten QoS ausgewählt wird, um in einen dritten Verbindungszustand zu wechseln.

7. Verfahren nach Anspruch 1, wobei das den höchsten Kosten zugeordnete SIM ausgewählt wird, um in einen dritten Verbindungszustand zu wechseln.

8. Verfahren nach Anspruch 1, wobei das SIM, das Dienste mit niedrigerer Priorität als Daten- oder Sprachdienste anbietet, ausgewählt wird, um in einen dritten Verbindungszustand zu wechseln.

9. Verfahren nach einem der Ansprüche 1 bis 8, wobei das Durchführen (203) einer Verbindungszustandsänderung eine Signalisierung der Radio Resource Control, RRC, an den dem ausgewählten SIM zugeordneten Netzknoten umfasst.

10. Verfahren nach einem der Ansprüche 1 bis 9, ferner umfassend:
*Durchführen* eines Verbindungszustandswechsels für das ausgewählte SIM vom dritten Verbindungszustand zu einem vierten Verbindungszustand, wenn bestimmt wird, dass eine Batterie der drahtlosen Kommunikationsvorrichtung (140) geladen wird oder der Batteriestrom größer als ein zweiter Schwellenwert ist, wobei der vierte Verbindungszustand im Vergleich zum dritten Verbindungszustand einen höheren Stromverbrauch für die drahtlose Kommunikationsvorrichtung (140) aufweist.

11. Verfahren nach 10, wobei der vierte Verbindungszustand der ursprüngliche Verbindungszustand des ausgewählten SIMs ist.

12. Drahtlose Kommunikationsvorrichtung (140) zur Handhabung von Verbindungszustandsänderungen in einem drahtlosen Kommunikationssystem (100), wobei die drahtlose Kommunikationsvorrichtung (140) mindestens zwei Teilnehmeridentitätsmodule, SIMs, umfasst, wobei ein erstes SIM in einem ersten ursprünglichen Verbindungszustand zu einem ersten Netzwerkknoten ist, ein zweites SIM in einem zweiten ursprünglichen Verbindungszustand zu einem zweiten Netzwerkknoten ist, wobei die drahtlose Kommunikationsvorrichtung (140) konfiguriert ist, um:
zu bestimmen, ob ein Batteriestrom in der drahtlosen Kommunikationsvorrichtung (140) unter einem ersten Schwellenwert liegt;
wenn der Batteriestrom unter dem ersten Schwellenwert liegt,
aus den mindestens zwei SIMs ein SIM auszuwählen, für das dessen ursprünglicher Verbindungszustand basierend auf einem Verbindungseigenschaft-Parameter in einen dritten Verbindungszustand geändert werden soll, wobei:
der Verbindungseigenschaft-Parameter mindestens einem zugeordnet ist von:
a) Funkkanaleigenschaften für den Verbindungszustand, der den jeweiligen SIMs zugeordnet ist,
b) Funknetzkapazitäten für den Verbindungszustand, der den jeweiligen SIMs zugeordnet ist,
c) der Dienstgüte (QoS) für den Verbindungszustand, der den jeweiligen SIMs zugeordnet ist,
d) Kosten für den Verbindungszustand, der den jeweiligen SIMs zugeordnet ist, und
e) Dienste, die durch den Verbindungszustand, der den jeweiligen SIMs zugeordnet ist, bereitgestellt werden,
wobei der erste und der zweite ursprüngliche Verbindungszustand ein aktiver Modus sind, und der dritte Verbindungszustand ein
Verbindungszustand ist, der einen geringeren Stromverbrauch für die drahtlose Kommunikationsvorrichtung (140) im Vergleich zu ihrem ursprünglichen Verbindungszustand impliziert und einer von einem aktiven Modus mit einer anderen Funkzugangstechnologie, RAT, als der Verbindungs-RAT des ausgewählten SIMs, einem Leerlaufmodus oder einem abgetrennten Zustand mit gelegentlichen Netzanschlüssen zum Abrufen empfangener Nachrichten ist; und
eine Verbindungszustandsänderung für das ausgewählte SIM von dessen ursprünglichen Verbindungszustand zu dem dritten Verbindungszustand durchzuführen.

13. Drahtlose Kommunikationsvorrichtung (140) nach Anspruch 12, wobei mehr als ein SIM ausgewählt wird, um deren jeweilige ursprüngliche Verbindungszustände in andere Verbindungszustände zu ändern, die einen geringeren Stromverbrauch haben als deren jeweilige ursprüngliche Verbindungszustände.

14. Drahtlose Kommunikationsvorrichtung (140) nach Anspruch 12, wobei die Funkkanaleigenschaften eines von Signal Interference Noise Ratio, SINR, Kanalzustandsinformation, CSI, Kanalbandbreite, Trägerfrequenz umfassen.

15. Drahtlose Kommunikationsvorrichtung (140) nach Anspruch 12, wobei QoS eines von Durchsatz, Latenz, gezielte Blockfehlerrate, BLER, umfasst.

16. Drahtlose Kommunikationsvorrichtung (140) nach Anspruch 12, wobei die Funknetzfähigkeiten eines von maximalem Übertragungsrang, Modulationsreihenfolge, Trägeraggregationsfähigkeiten, Strahlformungsfähigkeiten, Übertragungsmodus umfassen.

17. Drahtlose Kommunikationsvorrichtung (140) nach Anspruch 12 bis 16, wobei das SIM mit der niedrigsten QoS ausgewählt wird, um in einen dritten Verbindungszustand zu wechseln.

18. Drahtlose Kommunikationsvorrichtung (140) nach Anspruch 12, wobei das den höchsten Kosten zugeordnete SIM ausgewählt wird, um in einen dritten Verbindungszustand zu wechseln.

19. Drahtlose Kommunikationsvorrichtung (140) nach Anspruch 12, wobei das SIM, das Dienste mit niedrigerer Priorität als Daten- oder Sprachdienste anbietet, ausgewählt wird, um in einen dritten Verbindungszustand zu wechseln.

20. Drahtlose Kommunikationsvorrichtung (140) nach einem der Ansprüche 12 bis 19, wobei die drahtlose Kommunikationsvorrichtung (140) dazu konfiguriert ist, einen Verbindungszustandswechsel durchzuführen, indem sie dazu konfiguriert ist, eine Signalisierung der Radio Resource Control, RRC, an den dem ausgewählten SIM zugeordneten Netzknoten durchzuführen.

21. Drahtlose Kommunikationsvorrichtung (140) nach einem der Ansprüche 12 bis 20, die ferner konfiguriert ist, um:
einen Verbindungszustandswechsel für das ausgewählte SIM vom dritten Verbindungszustand zu einem vierten Verbindungszustand durchzuführen, wenn bestimmt wird, dass eine Batterie der drahtlosen Kommunikationsvorrichtung (140) geladen wird oder der Batteriestrom größer als ein zweiter Schwellenwert ist, wobei der vierte Verbindungszustand im Vergleich zum dritten Verbindungszustand einen höheren Stromverbrauch für die drahtlose Kommunikationsvorrichtung (140) aufweist.

22. Drahtlose Kommunikationsvorrichtung (140) nach Anspruch 21, wobei der vierte Verbindungszustand der ursprüngliche Verbindungszustand des ausgewählten SIMs ist.

## Revendications

1. Procédé effectué dans un dispositif de communication sans fil (140) pour gérer des changements d'état de connexion dans un système de communication sans fil (100), dans lequel le dispositif de communication sans fil (140) comprend au moins deux Modules d'Identité d'Abonné, SIM, dans lesquels un premier SIM est dans un premier état de connexion d'origine vers un premier nœud de réseau, un deuxième SIM est dans un second état de connexion d'origine vers un deuxième nœud de réseau, le procédé comprenant :
*déterminer* (201) si une puissance de batterie dans le dispositif de communication sans fil (140) est ou non en dessous d'un premier seuil ;
lorsque la puissance de batterie est en dessous du premier seuil,
*sélectionner* (202) un SIM parmi les au moins deux SIM pour lequel il faut changer son état de connexion d'origine en un troisième état de connexion sur la base d'un paramètre de caractéristique de connexion, dans lequel :
le paramètre de caractéristique de connexion est associé à au moins l'un parmi :
a) des caractéristiques de canal radio pour l'état de connexion associé aux SIM respectifs,
b) des capacités de réseau radio pour l'état de connexion associé aux SIM respectifs,
c) une Qualité de Service, QoS, pour l'état de connexion associé aux SIM respectifs,
d) un coût pour l'état de connexion associé aux SIM respectifs,
e) des services fournis par l'état de connexion associé aux SIM respectives,
les premier et deuxième états de connexion d'origine sont en mode actif, et
le troisième état de connexion est un état de connexion impliquant une consommation de puissance inférieure pour le dispositif de communication sans fil (140) par rapport à son état de connexion d'origine, et est l'un quelconque parmi un mode actif avec une technologie d'accès radio, RAT, différente de la RAT de connexion du SIM sélectionné, un mode repos, ou un état détaché avec des rattachements occasionnels au réseau pour interroger des messages reçus ; et
*effectuer* (203) un changement d'état de connexion pour le SIM sélectionné de son état de connexion d'origine au troisième état de connexion.

2. Procédé selon la revendication 1, dans lequel plus qu'un SIM sont sélectionnés pour changer leurs états de connexion d'origine respectifs en d'autres états de connexion qui ont une consommation de puissance inférieure par rapport à leurs états de connexion d'origine respectifs.

3. Procédé selon la revendication 1, dans lequel les caractéristiques de canal radio comprennent l'un parmi un rapport signal sur interférence plus bruit, SINR, des informations d'état de canal, CSI, une bande passante de canal, une fréquence porteuse.

4. Procédé selon la revendication 1, dans lequel la QoS comprend l'un parmi un débit, une latence, un taux d'erreurs sur les blocs, BLER, ciblé.

5. Procédé selon la revendication 1, dans lequel les capacités de réseau radio comprennent l'un parmi un rang de transmission maximal, un ordre de modulation, des capacités d'agrégation de porteuses, des capacités de formation de faisceaux, un mode de transmission.

6. Procédé selon la revendication 1, dans lequel le SIM ayant la QoS la plus faible est sélectionné pour passer à un troisième état de connexion.

7. Procédé selon la revendication 1, dans lequel le SIM associé au coût le plus élevé est sélectionné pour passer à un troisième état de connexion.

8. Procédé selon la revendication 1, dans lequel le SIM fournissant des services de priorité inférieure par rapport à des services de données ou vocaux est sélectionné pour passer à un troisième état de connexion.

9. Procédé selon l'une quelconque des revendications 1 à 8, dans lequel le fait d'effectuer (203) un changement d'état de connexion comprend une signalisation de Commande de Ressource Radio, RRC, au nœud de réseau associé au SIM sélectionné.

10. Procédé selon l'une quelconque des revendications 1 à 9, comprenant en outre :
*effectuer* un changement d'état de connexion pour le SIM sélectionné du troisième état de connexion à un quatrième état de connexion lorsqu'il est déterminé qu'une batterie du dispositif de communication sans fil (140) est en charge ou que la puissance de batterie est supérieure à un deuxième seuil, dans lequel le quatrième état de connexion a une consommation de puissance plus élevée pour le dispositif de communication sans fil (140) par rapport au troisième état de connexion.

11. Procédé selon la revendication 10, dans lequel le quatrième état de connexion est l'état de connexion d'origine du SIM sélectionné.

12. Dispositif de communication sans fil (140) pour gérer des changements d'état de connexion dans un système de communication sans fil (100), dans lequel le dispositif de communication sans fil (140) comprend au moins deux Modules d'Identité d'Abonné, SIM, dans lesquels un premier SIM est dans un premier état de connexion d'origine vers un premier nœud de réseau, un deuxième SIM est dans un deuxième état de connexion d'origine vers un deuxième nœud de réseau, le dispositif de communication sans fil (140) est configuré pour:
déterminer si une puissance de batterie dans le dispositif de communication sans fil (140) est ou non en dessous d'un premier seuil ;
lorsque la puissance de batterie est en dessous du premier seuil,
sélectionner un SIM parmi les au moins deux SIM pour lequel il faut changer son état de connexion d'origine en un troisième état de connexion sur la base d'un paramètre de caractéristique de connexion, dans lequel :
le paramètre de caractéristique de connexion est associé à au moins l'un parmi :
a) des caractéristiques de canal radio pour l'état de connexion associé aux SIM respectifs,
b) des capacités de réseau radio pour l'état de connexion associé aux SIM respectifs,
c) une Qualité de Service, QoS, pour l'état de connexion associé aux SIM respectifs,
d) un coût pour l'état de connexion associé aux SIM respectifs, et
e) des services fournis par l'état de connexion associé aux SIM respectives,
les premier et deuxième états de connexion d'origine sont en mode actif, et
le troisième état de connexion est un état de connexion impliquant une consommation de puissance inférieure pour le dispositif de communication sans fil (140) par rapport à son état de connexion d'origine, et est l'un quelconque parmi un mode actif avec une technologie d'accès radio, RAT, différente de la RAT de connexion du SIM sélectionné, un mode repos, ou un état détaché avec des rattachements occasionnels au réseau pour interroger des messages reçus ; et
effectuer un changement d'état de connexion pour le SIM sélectionné de son état de connexion d'origine au troisième état de connexion.

13. Dispositif de communication sans fil (140) selon la revendication 12, dans lequel plus qu'un SIM sont sélectionnés pour changer leurs états de connexion d'origine respectifs en d'autres états de connexion qui ont une consommation de puissance inférieure par rapport à leurs états de connexion d'origine respectifs.

14. Dispositif de communication sans fil (140) selon la revendication 12, dans lequel les caractéristiques de canal radio comprennent l'un parmi un rapport signal sur interférence plus bruit, SINR, des informations d'état de canal, CSI, une bande passante de canal, une fréquence porteuse.

15. Dispositif de communication sans fil (140) selon la revendication 12, dans lequel la QoS comprend l'un parmi un débit, une latence, un taux d'erreurs sur les blocs, BLER, ciblé.

16. Dispositif de communication sans fil (140) selon la revendication 12, dans lequel les capacités de réseau radio comprennent l'un parmi un rang de transmission maximal, un ordre de modulation, des capacités d'agrégation de porteuses, des capacités de formation de faisceaux, un mode de transmission.

17. Dispositif de communication sans fil (140) selon les revendications 12 à 16, dans lequel le SIM ayant la QoS la plus faible est sélectionné pour passer à un troisième état de connexion.

18. Dispositif de communication sans fil (140) selon la revendication 12, dans lequel le SIM associé au coût le plus élevé est sélectionné pour passer à un troisième état de connexion.

19. Dispositif de communication sans fil (140) selon la revendication 12, dans lequel le SIM fournissant des services de priorité inférieure par rapport à des services de données ou vocaux est sélectionné pour passer à un troisième état de connexion.

20. Dispositif de communication sans fil (140) selon l'une quelconque des revendications 12 à 19, dans lequel le dispositif de communication sans fil (140) est configuré pour effectuer un changement d'état de connexion en étant configuré pour effectuer une signalisation de Commande de Ressource Radio, RRC, au nœud de réseau associé au SIM sélectionné.

21. Dispositif de communication sans fil (140) selon l'une quelconque des revendications 12 à 20, qui est en outre configuré pour :
effectuer un changement d'état de connexion pour le SIM sélectionné du troisième état de connexion à un quatrième état de connexion lorsqu'il est déterminé qu'une batterie du dispositif de communication sans fil (140) est en charge ou que la puissance de batterie est supérieure à un deuxième seuil, dans lequel le quatrième état de connexion a une consommation de puissance plus élevée pour le dispositif de communication sans fil (140) par rapport au troisième état de connexion.

22. Dispositif de communication sans fil (140) selon la revendication 21, dans lequel le quatrième état de connexion est l'état de connexion d'origine du SIM sélectionné.
